# EUROPEAN PATENT APPLICATION

(11) **EP 1 788 809 A1**
(43) Date of publication of application: **23.05.2007**
(21) Application number: 05782307.2
(22) Date of filing: 08.09.2005
(51) Int. Cl.: H04N 7/14

(54) **COMMUNICATION TERMINAL AND COMMUNICATION METHOD THEREOF**

(30) Priority: 09.09.2004 JP 2004262217; 16.09.2004 JP 2004270409
(71) Applicant: MATSUSHITA ELECTRIC INDUSTRIAL CO., LTD., Osaka 571-8501 (JP)
(72) Inventor: YONEMOTO, Yoshifumi c/o Matsushita El. Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/016534
(87) International publication number: WO 2006/028181

(57) **Abstract**

A communication terminal capable of helping make communication with the other end more active and of enabling even elder people or the like, who are unaccustomed to operating information devices, to have telephone conversation, while readily displaying various video information through simple operation, thereby furthering warm communication. In this apparatus, an information storage processing part (102) performs processes related to information storage. An information-of-the-other-end acquiring part (104) acquires, as search key information, the information related to the other end of current communication from the communication terminal or a communication terminal of the other end. A stored-information search part (105) uses, as the search key information, the information related to the other end of communication and acquired by the information-of-the-other-end acquiring part (104) to search the information stored in an information storage part (103) and extract information having deep relationship with the other end of communication. An output part (107) displays video information by use of a display device or reproduce audio information by use of a speaker.

## Description

### Technical Field

The present invention relates to a communication terminal for communicating through the use of a video telephone, for example, and to a communication method of the same.

### Background Art

Asimultaneous-viewimagetelephonesystem has been proposed as an apparatus for helping to make conversation more enjoyable during communication using a video telephone (see Patent Document 1, for example) .

In the abovementioned conventional system, since each terminal generally has different information, a support apparatus is used for facilitating smooth conversation by causing the information stored in the database of each terminal to be in the same state before the telephone call is initiated, searching the information in the databases as needed in this state, and displaying the searched data in each terminal.
Patent Document 1: Japanese Patent Application Laid-Open No.HEI3-49385.

### Disclosure of Invention

### Problems to Be Solved by the Invention

However, the conventional apparatus described above has drawbacks in that the information stored in the database of each terminal must be placed in the same state before the call is initiated, and this type of pre-call preparation is burdensome and impractical.

An object of the present invention is to provide a communication terminal capable of helping make communication with the other party more active, and of enabling even the elderly and others who may be unaccustomed to operating information devices to have telephone conversation while readily displaying various video information through simple operation, thereby facilitating warm communication. An object of the present invention is also to provide a communication method for the communication terminal.

### Means for Solving the Problem

The communication terminal of the present invention comprises a key information acquiring section that acquires key information from other party, a search section that searches storage information stored in the memory and acquires information related to the key information on the basis of the key information that is acquired from the other party, and an information display section that displays the information obtained as a result of search by the search section.

The communication terminal of the present invention comprises a key information acquiring section that acquires key information from other party, a search section that searches storage information stored in the memory and acquires information related to the key information on the basis of the key information that is acquired from the other party, and an information presentation section that transmits to the other party the information obtained as a result of search by the search section.

The communication method of the present invention comprises a key information acquiring step of acquiring key information from other party, a search step of searching stored information in memory and acquiring information related to the key information on the basis of the key information that is acquired from the other party, and an information display step of displaying the information obtained as a result of search in the search step.

The communication method of the present invention comprises a key information acquiring step of acquiring key information from other party, a search step of searching storage information stored in the memory and acquiring information related to the key information on the basis of the key information that is acquired from the other party, and an information presentation step of transmitting to the other party the information obtained as a result of search in the search step.

### Advantageous Effect of the Invention

The present invention is capable of helping make communication with the other party more active, and of enabling even the elderly and others who may be unaccustomed to operating information devices to have telephone conversation while readily displaying various video information through simple operation, thereby facilitating warm communication.

### Brief Description of Drawings

FIG.1 is a block diagram showing the structure of the communication terminal according to Embodiment 1 of the present invention;
FIG.2 is a structural diagram of the communication system according to Embodiment 1 of the present invention;
FIG.3 is a sequence diagram showing the method of acquiring other-end information according to Embodiment 1 of the present invention;
FIG.4 is a flow diagram showing the method of storing received image information according to Embodiment 1 of the present invention;
FIG.5 is a flow diagram showing the method of responding to a request for other-end information according to Embodiment 1 of the present invention;
FIG.6 is a flow diagram showing the method of searching stored information on the basis of other-end information according to Embodiment 1 of the present invention;
FIG.7 is a diagram showing an example of a display of reproduced information according to Embodiment 1 of the present invention;
FIG.8 is a block diagram showing another structure of the communication terminal according to Embodiment 1 of the present invention;
FIG.9 is a diagram showing another example of the display of output information according to Embodiment 1 of the present invention;
FIG.10 is a diagram showing another example of the display of output information according to Embodiment 1 of the present invention;
FIG.11 is a flow diagram showing the extraction of stored information based on sound recognition according to Embodiment 3 of the present invention;
FIG.12 is a sequence diagram showing the communication method according to Embodiment 4 of the present invention;
FIG.13 is a block diagram showing the structure of the communication terminal according to Embodiment 4 of the present invention;
FIG. 14 is a flow diagram showing the method of storing the stored information on the basis of image recognition according to embodiment 5 of the present invention;
FIG.15 is a flow diagram showing the method of searching the stored information on the basis of voice recognition according to Embodiment 5 of the present invention.

### Best Mode for Carrying Out the Invention

Embodiments of the present invention will be described in detail hereinafter with reference to the accompanying drawings.

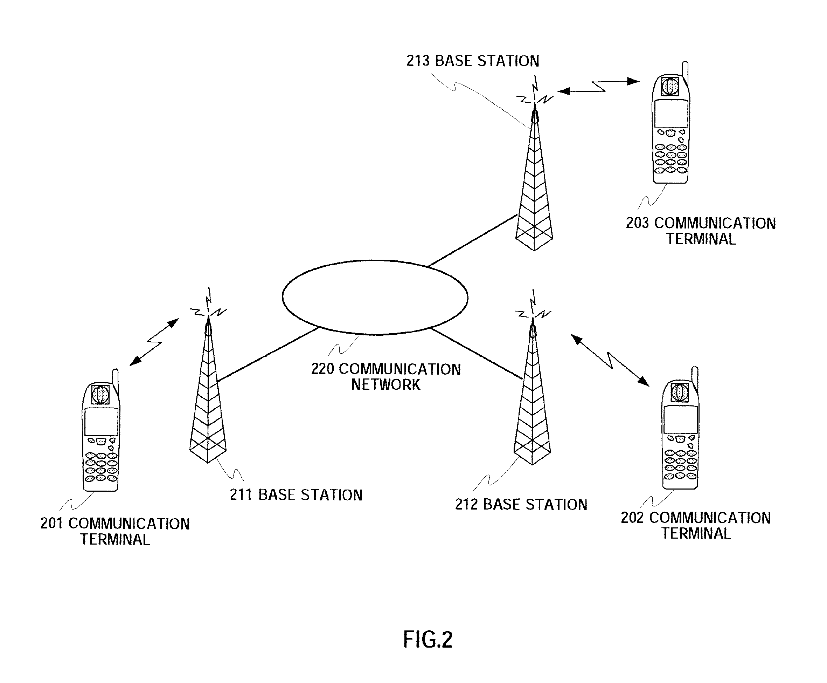

(Embodiment 1)
In the communication system according to an embodiment of the present invention, a plurality of communication terminals (201 to 203) is connected via communication network 220, as shown in FIG.2.

Communication terminals (201 to 203) of the present invention are mobile telephone devices, for example. Communication terminals (201 to 203) are connected to communication network 220 via base stations (211 to 213).

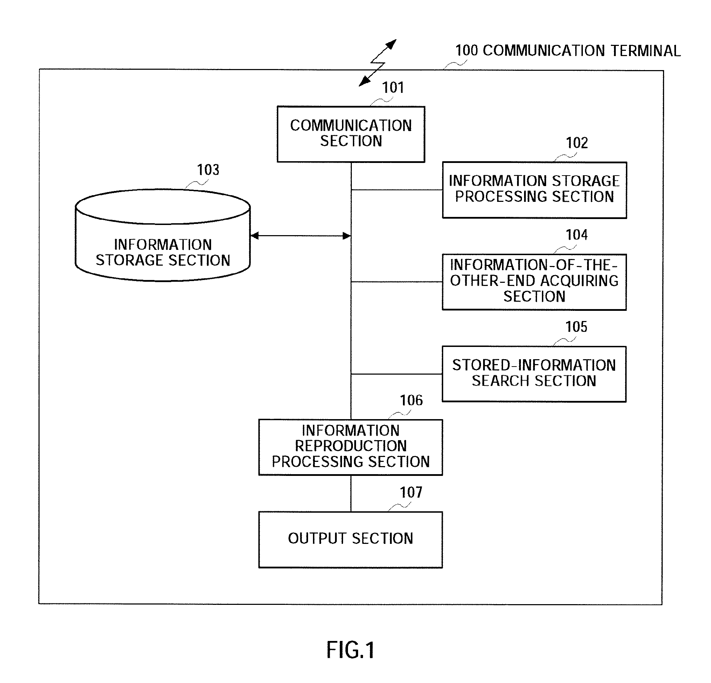

As shown in FIG.1, communication terminal 100 of the present invention is provided with communication section 101, information storage processing section 102, information storage section 103, information-of-the-other-end acquiring section 104, stored-information search section 105, information reproduction processing section 106, and output section 107.

Communication section 101 makes a transmission/reception call connection and exchanges image information, sound information, text-based information, and other data when communication using a video telephone or the like is performed. Text-based information is any data information, and includes displayed data or control information.

Information storage processing section 102 performs storage processing of reproduced images of the video telephone, storage processing of outgoing and incoming mail, processing for storing user information in an address book, and other processing related to storage of information.

Information storage section 103 stores the information processed for storage by information storage processing section 102. Specifically, information storage section 103 stores images reproduced in the video telephone, and also performs advance storage of various types of information that include mail or information acquired on the World Wide Web, content received via the network; address information that includes addresses, telephone numbers, and other information about friends and acquaintances; and other information.

Any type of memory, specific examples of which include electrically erasable nonvolatile memory (EEPROM), readable/writable volatile memory (SRAM or DRAM), and magnetic memory (hard disk), may be used for information storage section 103 as the memory installed in communication terminals 201 to 203. An external storage apparatus, for example, card-type memory, stick-type memory, or the like, that can be removed from communication terminals 201 to 203 may be used for information storage section 103. Furthermore, a storage apparatus of a server on a network formed by a wireless network or a wired network may be used as information storage section 103.

Information-of-the-other-end acquiring section 104 is the key information acquiring section of the present invention that acquires information related to the other party during communication as search key information from the first-end terminal or the other-end terminal. The acquired key information is a person's information such as preference information or information that uniquely identifies the other party during a video telephone call, or position information, time information, and other environment information.

Stored-information search section 105 searches the information stored in information storage section 103 as key information (search information) for searching the other-end information acquired by information-of-the-other-end acquiring section 104, and extracts the information (searched information) that is closely related to the other party.

Information reproduction processing section 106 uses output section 107 to reproduce the searched information that is closely related to the other party and was extracted by stored-information search section 105.

Output section 107 is composed of a speaker or a display that displays an image. For example, information reproduction processing section 106 may show extracted image information on the display or reproduce extracted voice information in the speaker through the use of output section 107.

Each of communication terminals 201 to 203 is provided with communication section 101, information storage processing section 102, information storage section 103, information-of-the-other-end acquiring section 104, stored-information search section 105, information reproduction processing section 106, and output section 107 shown in FIG.1.

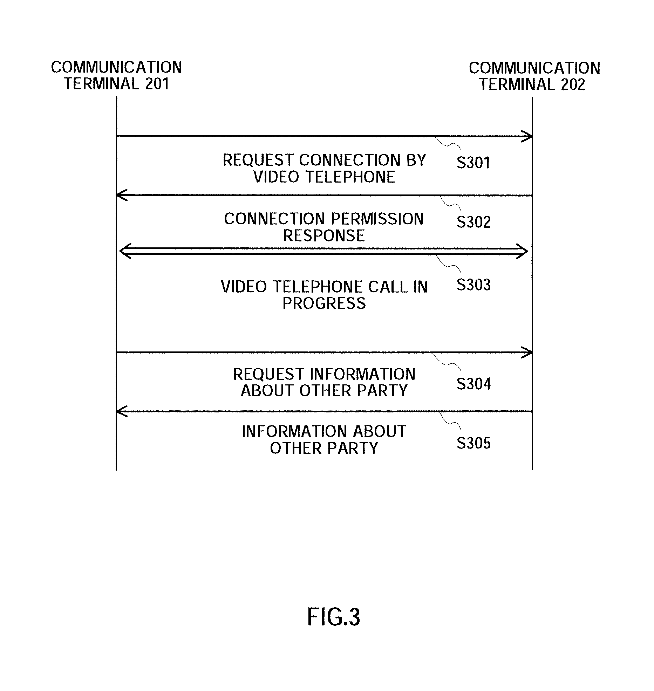

The method of communication in the communication system shown in FIG.2 will next be described. The sequence by which information related to the other party is acquired during a video telephone call will first be described using FIG.3.

An example is shown in FIG.3 in which communication terminal 201 and communication terminal 202 are communicating with each other, communication terminal 201 acquires the person's information about the other party from communication terminal 202, and communication terminal 201 uses the acquired person's information as key information to search and extract the information stored in information storage section 103 of communication terminal 201.

Communication terminal 201 issues a request for connection by video telephone to communication terminal 202 (step S301).

Communication terminal 202 issues a permission response in response to the request to connect by video telephone (step S302).

After the connection process described above, data transmission settings are made for video telephone communication.

Video telephone communication in the communication system of the present invention uses the 3G-324M protocol of the third-generation mobile telephone standard, which uses data multiplexing according to ITU-T recommendation H.223 as the standard system for multiplexing multimedia information.

The communication terminals establish a data transmission channel that can transmit any type of data, in addition to a video channel for transmitting image information, and an audio channel for transmitting sound information according to the 3G-324M protocol.

An example of information transmission between terminal apparatuses will next be described in which a person's information related to the other party is transmitted using the aforementioned data transmission channel.

Video telephone communication is made possible by the establishment of the 3G-324Mprotocol (step S303). At this time, a conversation can take place by voice and the display of the communicating parties' images to each other between the communication terminals.

During communication between communication terminal 201 and communication terminal 202 (step S303), communication terminal 201 stores the image information received from communication terminal 202, whereupon communication terminal 201 issues a request to communication terminal 202 to acquire the person's information about the other party (step S304).

Communication terminal 202 extracts the desired person's information and transmits the information to communication terminal 201 (step S305) in response to the request from communication terminal 201 to acquire the person's information.

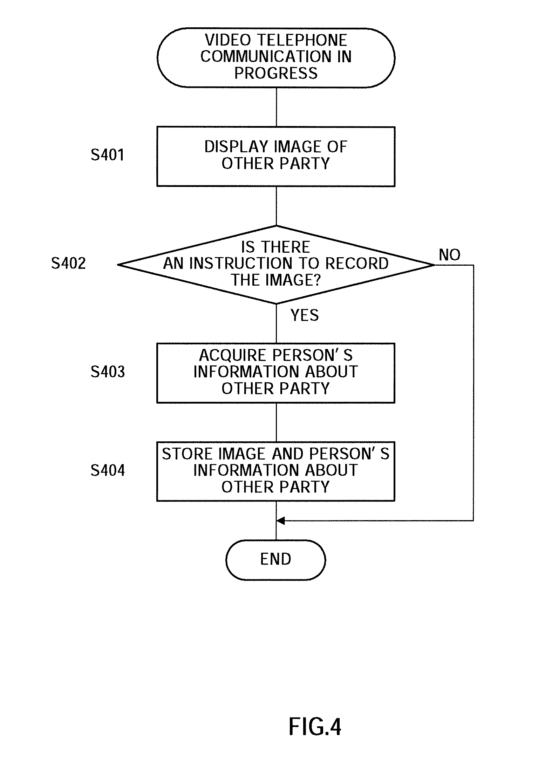

FIG.4 will next be used to describe the flow of processing whereby the image information about the other party and the person's information (attribute information) related to the other party are correlated in communication terminal 201. FIG.4 shows a case in which communication terminal 201 and communication terminal 202 communicate with each other, communication terminal 201 receives image information and acquires information (person's information) relating to other-party communication terminal 202, and the received image information and attribute information are correlated with each other and stored, wherein the attribute information is the acquired information related to communication terminal 202.

Communication terminal 201 displays an image of the other party during communication by video telephone (step S401).

When communication terminal 201 detects an instruction to store the image information about the other party via a key input operation or the like from the user of communication terminal 201 (step S402), communication terminal 201 issues a request for acquisition of a person's information to other-party communication terminal 202 (step S304 of FIG.3), and receives the person' s information about the other party from communication terminal 202 (step S403).

Information storage processing section 102 of communication terminal 201 correlates the received image information about the other party and the person' s information that is acquired in step S403 and that includes a telephone number as information that uniquely identifies the other party, and stores the information thus correlated as stored information in information storage section 103 of communication terminal 201 (step S404). The image information and the person's information (attribute information) are correlated and stored, whereby the stored information in information storage section 103 of communication terminal 201 is searched and extracted using the person's information as key information. Rapid search is therefore possible.

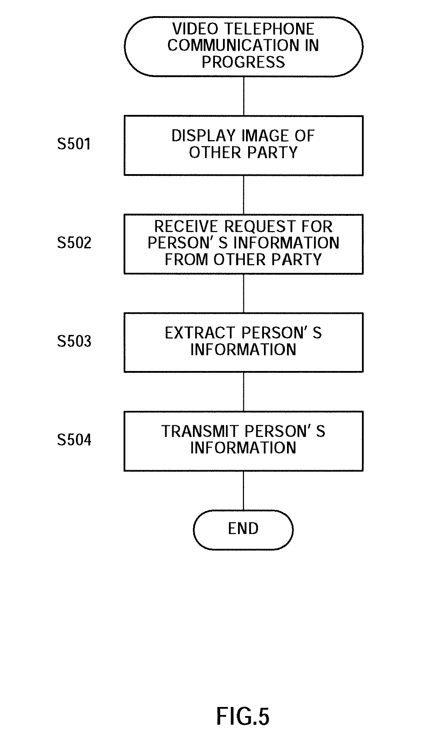

The flow of processing in communication terminal 202 that receives the person's information request from communication terminal 201 will next be described with reference to FIG.5.

Communication terminal 202 displays an image of the other party during video telephone communication with communication terminal 201 (step S501).

Communication terminal 202 receives a request for acquisition of a person's information, which is information related to the other party, from communication terminal 201 via the data transmission channel (step S502). The person's information requested in this instance uniquely identifies the user of communication terminal 202.

When communication terminal 202 receives the request for acquisition of a person's information, the information stored in information storage section 103 of communication terminal 202 is referenced according to the request; the person's information, for example, the video telephone number, of the user of communication terminal 202 is extracted (step S503); and communication terminal 202 then transmits the requested person's information to communication terminal 201 via the data transmission channel (step S504).

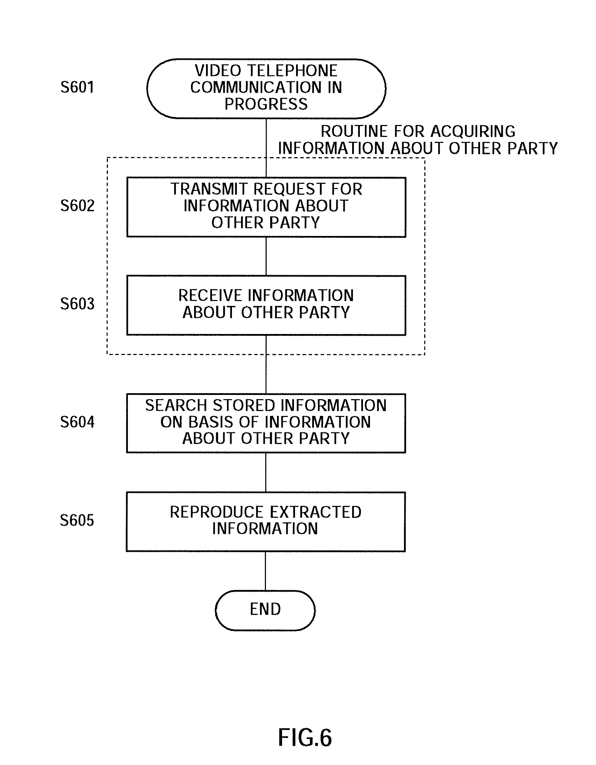

The flow of processing for searching the stored information in communication terminal 201 will next be described with reference to FIG.6.

Communication terminal 201 establishes communication by video telephone with communication terminal 202 and enters a state of communication (step S601).

It is thereby possible to display the image of the other party received via the video channel in H.223 multiplexing. A conversation is also possible using the voice channel (audio channel).

Communication terminal 201 requests a person's information representing the information about the other party from communication terminal 202 of the other party via the data transmission channel (step S602) and acquires the person's information about the user (user B) that corresponds to communication terminal 202 (step S603) .

Accordingly, communication terminal 201 acquires identifying information representing the person's information about the other party that uniquely identifies the other party. The identifying information that uniquely identifies the other party is a telephone number.

In step S603, when the person's information is acquired, stored-information search section 105 automatically searches the information stored in information storage section 103 using the telephone number as search key information. The information is the person's information about the other party that uniquely identifies the other party and is obtained by information-of-the-other-end acquiring section 104 (step S604).

Information storage section 103 stores a person's image information in advance, and also stores image information and the person's information associated with the image information as attribute information. Accordingly, stored-information search section 105 can use the telephone number for uniquely identifying user B, who is the other party, as search key information to extract information related to user B (information related to the key information) from the information stored in information storage section 103.

When search is completed, information reproduction processing section 106 automatically displays the extracted information (searched information) related to the other party through the use of output section 107 (step S605).

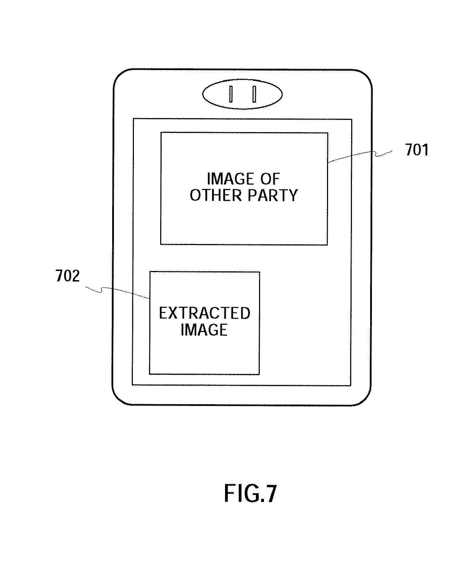

FIG.7 shows an example of the display in communication terminal 201 that shows the image information and the data extracted by search.

In the display of step S605 as shown in FIG.7, an image 701 of the other party in communication through the video channel is displayed at the top of the screen, and image information (searched information) 702 related to the other party, which is the information searched and extracted based on the information (information for search) related to the other party, is displayed at the bottom of the screen.

In Embodiment 1 thus configured, communication terminal 201 searches and displays the information stored in communication terminal 201 using the person' s information acquired from other-party communication terminal 202 as key information, and information that is of interest to the other party is therefore automatically displayed. It is thereby possible to help make communication with the other party more active, and to enable even the elderly and others who may be unaccustomed to operating information devices to have telephone conversation while readily displaying various video information through simple operation, thereby facilitating warm communication. Specifically, since the information stored in information storage section 103 is automatically searched on the basis of key information related to the other party in embodiment 1, the information related to the other party can be acquired without a complex operation. Also, according to Embodiment 1, since received information that includes image information received from the other party, and a person's information and other information about the other party, are correlated with each other and stored, the information about the other party can be referenced to search the received information, and the intended information can be easily extracted even when a large amount of information is searched.

In the description given above, the acquired information related to the other party was a person's information for uniquely identifying the other party, but preference information and other information may also be included in the person's information.

Furthermore, when other types of a person's information (personal information) is used in addition to the information for uniquely identifying the other party, it is possible to further narrow down the information that is searched when the stored information is searched.

When preference information or the like is used as the person's information instead of information for uniquely identifying the other party, search may not necessarily be limited to information related to the other party. For example, information about a favorite artist may be used as the search condition to search information that relates to the artist.

By including date of birth, sex, marital status, occupation, current address, hobbies, tastes, and other information as the person's information about the other party, the person's information can be used to narrow down the information that is searched during search of the stored information.

In the example described above, a telephone number was used as the person's information for uniquely identifying the other party, but the identifying information for uniquely identifying the other party may be an item of information other than a telephone number, and a user identifier that is issued on the basis of a predefined rule may also be used. A username, mail address information, or the like that is registered in address information or the like may also be used.

In the example described above, a person's information was used as the information related to the other party, but position information, time information, and other environment information may also be used in addition to the person's information.
For example, communication terminal 201 may be configured so as to request information related to the environment instead of performing step S304 in FIG.3 in which the information about the other party is requested.

The information related to the environment is information that relates to conditions of the environment in which communication terminal 202 (the other party) is placed, for example, latitude/longitude information and other location information, or the current time and other time information.

When, for example, communication terminal 201 requests position information as the information related to location, communication terminal 202 acquires position information using a GPS positioning function (not shown). Communication terminal 202 transmits the acquired position information to communication terminal 201 via the data transmission channel.

This method enables communication terminal 201 to record the position information about other-party communication terminal 202 as attribute information as well when the image information about the other party is stored. Communication terminal 201 can extract related information using the position information as a basis in subsequent search. The positioning function may be a function other than GPS, and any other method capable of acquiring position information may be used. Position information may be acquired from a cellular network, for example.

The information related to location is also not necessarily latitude/longitude information, and any information that relates to location may be used. For example, a postal code, address information, area information, landmark information, and the like may be used. The latitude/longitude information obtained may also be used as a basis for conversion to location information of a different format. For example, information may be converted to area information and landmark information on the basis of latitude/longitude information. The conversion to location information of a different format may be performed in the terminal that requests the information related to location, or the conversion may be performed in the terminal that receives the request. A configuration may also be adopted in which the terminal that issues the request specifies the suitable format for the information related to location and requests the information related to location. In this case, the communication terminal that receives the request for location information in the specified format performs the conversion to the appropriate format for the information related to location and issues a response. The environment-related information acquired from the other party is not limited to location-related information and may be other environment-related information. Specifically, time information about the other party may be acquired as the environment-related information, and the acquired time information may be correlated with the received image information and stored. In this case, when there is a time difference between the first party and the other party, the information can be stored so as to reflect the time of the other party.

The technical meaning of the passage "received information that includes image information received from the other party, and a person's information and other information about the other party are correlated with each other" is that image information that corresponds in a one-to-one relationship to the extracted person's information (attribute information), or image information that corresponds in a one-to-n relationship to the extracted person's information (attribute information), is extracted in a case in which certain person's information (attribute information) is extracted, including the case in which a certain type of person's information (attribute information) and the image information thereof have a one-to-one relationship, and the case in which a certain type of person's information (attribute information) and the image information thereof have a one-to-n relationship.

The process of acquiring the information about the other party (steps S602 and S603) herein will be described in further detail.

The acquired information about the other party in the process for acquiring the information about the other party may be a person's information, environment information, or any other information about the other party, but the following description is of methods for specifying the information requested by the requesting party (communication terminal 201).

In one of these methods, communication terminal 201 requests acquisition of predetermined information about the other party. In this case, the telephone number, for example, of the other party terminal is requested as information for uniquely identifying the other party.

The requested information may also be selected using a list menu or the like.

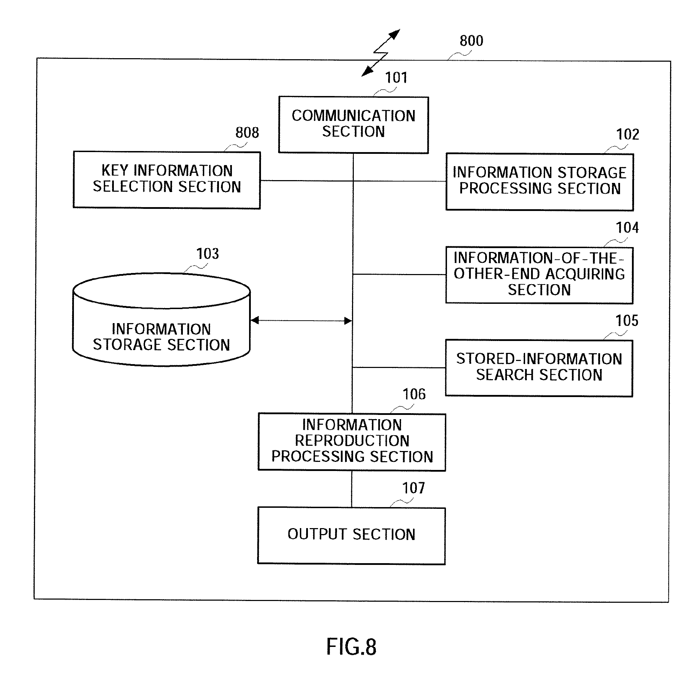

Communication terminal 800 shown in FIG.8 is provided with key information selection section 808 to select the requested information.

For example, a configuration may be adopted in which the option to request a person's information, the option to request environment information, and the option to request both types of information can be selected on a list menu presented by key information selection section 808.

In another method, the desired information is requested by using a cursor or other pointing apparatus to indicate a target (a portion of an image) on an image of the other party that is shown on the display. In other words, when a person's image is specified with the cursor, that person's information is requested, and when the background is specified, the position information and other environment information is requested.

An example was described in which communication terminal 201 issues a request for information about the other party and receives the other party's information in response, but communication terminal 202 may also issue notification of the information about the other party without receiving a request.

When the communication terminal to which the call is made uses information related to the other party, notification of the origin number that is obtained in the process of connecting for communication may be used as the information about the other party.

The communication terminal making the call may also use the telephone number from which the call is being made to search the information stored in information storage section 103 of the communication terminal making the call.

The communication terminals may also be configured so as to refer to and utilize additional personal information related to the other party through the use of user information that is correlated with information stored in information storage section 103 that uniquely identifies the other party.

The person's information (personal information) of the other party may include date of birth, sex, marital status, occupation, current address, hobbies, tastes, and other information that may be used as key information (search conditions) for search.

Accordingly, hobbies, tastes, and other psychographic information, as well as age, family composition, and other demographic information may be used as the search key information.

In the example of Embodiment 1 described above, a telephone number was used as the person's information for uniquely identifying the other party, but the information for uniquely identifying the other party may be information other than a telephone number, and a user identifier that is issued on the basis of a predefined rule may also be used. A username, mail address information, or the like that is registered in address information or the like may also be used.

In Embodiment 1, a person's information was used as the information related to the other party (key information), but position information, time information, and other environment information may also be used in addition to the person's information.

The following description is of an example in which position information is acquired from the other-party terminal as the information related to the other party.

In the request for information of the other party in step S304 of FIG.3, communication terminal 201 requests the position information of communication terminal 202.

Communication terminal 202 that receives the request for position information obtains position information through the use of GPS or another position measuring capability.

In the transmission of the other party's information in step S305, communication terminal 202 transmits the position information to communication terminal 201.

Communication terminal 201 then obtains the position information of communication terminal 202 representing the other party.

Communication terminal 201 uses the acquired position information about the other party as key information to search the information stored in communication terminal 201, and through this search, communication terminal 201 performs extraction with priority for the stored information that relates to the position information about the other party, and presents the extracted information to the user.

The stored information may also be searched according to information for uniquely identifying the other party, and the range of information may also be narrowed by the position information representing environment information.

A GPS function may be used to acquire the position information, but the positioning function may also be a function other than GPS, and any other method capable of acquiring position information may be used. Position information may be acquired from a cellular network, for example.

The position information is also not necessarily latitude/longitude information, and any information that relates to position may be used. For example, a postal code, address information, area information, landmark information, and the like may be used.

The latitude/longitude information obtained may also be used as a basis for conversion to location information of a different format using a database that relates to position information. For example, information may be converted to area information and landmark information on the basis of latitude/longitude information.

The conversion to position information of a different format may be performed in the terminal that requests the position information, or the conversion may be performed in the terminal that receives the request for position information.

A configuration may also be adopted in which the terminal that issues the request specifies the suitable format for the position information and requests the position information. In this case, the communication terminal that receives the request for position information in the specified format performs the conversion to the appropriate format for the position information and issues a response.

In the search of the stored information, position information related to the first terminal may be used as well as the position information related to the other party as the information used for search, and the position information of both terminals may also be used together. To use the position information of both terminals together is to use the space between the two positions as the information for search, for example, to give priority to information related to the space between two points for search. For example, information related to a certain store that is located between the two points is given priority for search.

Time information and other environment information may also be acquired together with position information, and using these types of information together as the search key information makes it possible to search information that is more in accordance with the condition of the other party.

A single type of information (searched information) was extracted in the case described above, but a plurality of types of information is also sometimes extracted. When there is a plurality of related information, the information is presented to the user according to a predetermined method.

In one method, an item with the closest time of image capture is selected with the highest priority when only a single item of information is displayed from the plurality of items of searched information.

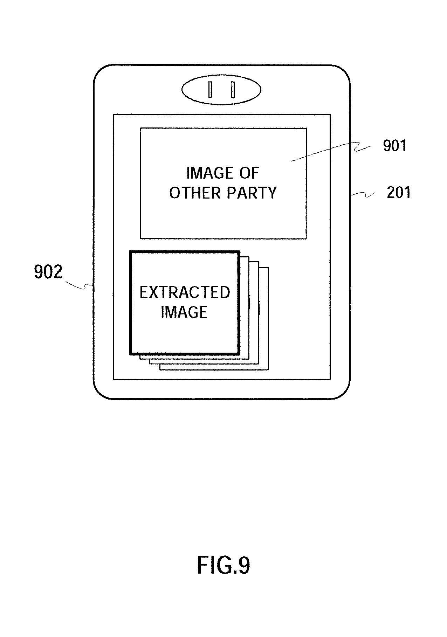

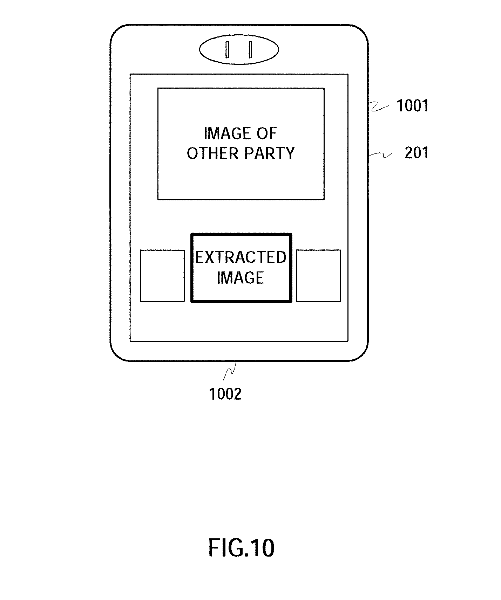

The plurality of searched items of target information may be shown in a display that switches in sequence at a constant time interval, or a plurality of items of information may be simultaneously displayed. The information may be displayed as shown in FIGs.9 and 10, for example.

In FIGs.9 and 10, the reference numerals 901 and 1001 refer to images of the other party during communication, and reference numerals 902 and 1002 refer to a plurality of images extracted as a result of search.

When the extracted stored information is a high-resolution still image or moving image, thumbnails or another method having a minimal display load or display area may be used so that a plurality of items of information is displayed to enable a user to select the information.

When the extracted information is a moving image, correlated attribute information may be used as a basis for displaying the most relevant frame or scene.

When a plurality of extracted items of information is simultaneously displayed, or when the user is given the ability to choose, the information may also be arranged according to a time axis.

A telephone number was used in Embodiment 1 as the information for uniquely identifying the other-party user, but a name or a user identifier may be separately created even when the specifying information is not a telephone number. In this case, it is possible to adapt to a user who has a plurality of telephone numbers.

The system in Embodiment 1 was composed of base stations and a communication network, but another possible embodiment is one in which communication terminals communicate with each other directly using a local communication interface.

The other party was a single user in the example described in Embodiment 1, but a plurality of other parties may also participate in a multi-call or the like. During a multi-call, a common action schedule or the like that is based on group information, hobby information, or schedule information that is common among a plurality of users may be used as the search key information.

(Embodiment 2)
Embodiment 1 was configured so that information specifying the other party was obtained in step S604 of FIG.6, but an example is described in Embodiment 2 in which communication terminal 201 obtains environment information from communication terminal 202 as key information (search conditions) used to search the stored information.

Specifically, the environment information is used as the person's information for uniquely identifying the other party, and time information representing environment information is used as search key information.

In a case in which time information is used as key information for search (search conditions), when the date of communication is, for example, February 16, search is performed with priority for information related to a February 16 in the past.

Image information in which the date and time of image capture is used as attribute information is stored in information storage section 103 of communication terminal 201. The date and time of image capture refers to the date and time of video recording during a video telephone call, or the date and time at which an image was captured by a camera, for example.

Information storage section 103 of communication terminal 201 stores address information and schedule information.

As described in embodiment 1, communication terminal 201 issues a request for connection by video telephone to communication terminal 202, enters a state of communication by video telephone, and displays an image of the other party.

Information-of-the-other-end acquiring section 104 of communication terminal 201 acquires information that uniquely identifies user B, who is the other party.

In Embodiment 2, user B is selected from address information, and a video telephone connection is made. Accordingly, the information that uniquely identifies the other party is obtained from the address information. In other words, user B, who is the other party, is uniquely identified using a telephone number obtained from the address information.

Information-of-the-other-end acquiring part 104 also acquires current time information (date and time information) as key information from a clock/calendar function (not shown).

Stored-information search section 105 of communication terminal 201 uses the telephone number information that uniquely identifies the other party as a basis for extracting information that relates to user B, who is the other party. Stored-information search section 105 also makes a selection with priority given to information related to the current date and time from among the extracted information related to user B. Specifically, when information is present that corresponds to the current date (February 16), information that corresponds to the date of February 16 is given priority for selection.

Information reproduction processing section 106 of communication terminal 201 then displays the extracted information related to the other party user B through the use of output section 107.

The stored information to be searched is important information related to the current date, for example, the birthday of the other party. When information indicating that time was spent together with the other party on the current date (February 16), or other information is stored as past information in the schedule information, information to that effect may also be presented. When information related to the location where time was spent together is stored in the schedule information, information to that effect can also be presented by searching information on the basis of the position information about the other party. When the current day's schedule in the stored schedule information includes an appointment with user B, a display of the appointment can also be shown.

Time information may be acquired from the other party, and the acquired time information may be used as the search key information. This configuration is effective when there is a time difference in relation to the other party. For example, when the current time of the other party's communication terminal is 21:00 in the evening, data relating to the evening is given priority, namely, information related to the time of the other party is given priority for search.

As described above, according to Embodiment 2, communication terminal 201 searches and displays the information stored in communication terminal 201 using the environment information acquired from other-party communication terminal 202 as key information, and information that is of interest to the other party is therefore automatically displayed. It is thereby possible to help make communication with the other party more active, and to enable even the elderly and others who may be unaccustomed to operating information devices to have telephone conversation while readily displaying various video information through simple operation, thereby facilitating warm communication.

Date information was used as the time information in Embodiment 2, but information related to another indication of time may also be used, and the time-related information may be time information, date and time information, a day of the week, month information, a predetermined period of time, or the like.

The information that is searched (searched information) may be mail information exchanged in the past. In this case, mail information or the like received from a person in communication, for example, is searched.

(Embodiment 3)
Embodiment 3 is a communication terminal that is configured so that information related to the other party is obtained by recognizing information received from the other party, and the recognized information is used as the search key information.

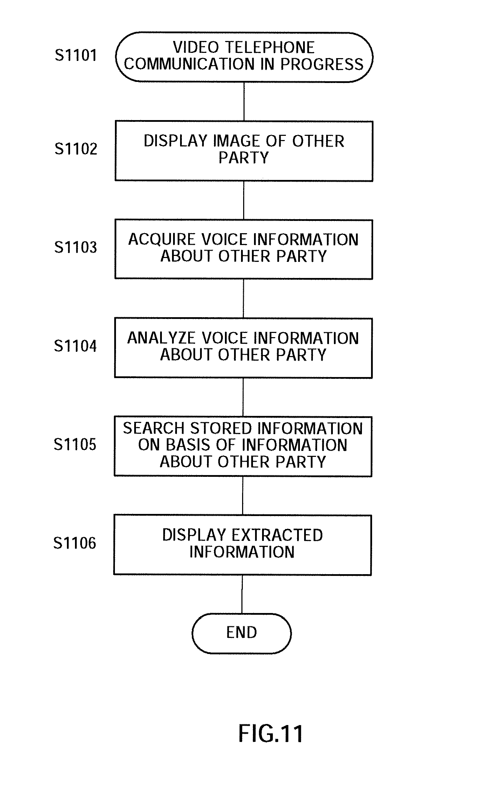

A communication method whereby stored information is searched and presented on the basis of recognized information obtained by sound recognition according to Embodiment 3 will be described with reference to FIG.11.

Image information and information about personal characteristics that is related to the image information are stored together in information storage section 103 of communication terminal 201. The information about personal characteristics includes voice-related characteristic information, and communication terminal 202 transmits the key information to communication terminal 201 in response to a key information acquisition request from communication terminal 201.

Communication terminal 201 issues a request for connection by video telephone to communication terminal 202, and when an acceptance response is received from communication terminal 202, video telephone communication is performed according to the 3G-324M protocol using H.223 multiplexing (step S1101).

Images are exchanged using the video channel, and an image of the other party is displayed by output section 107 (step S1102). A conversation also takes place via the audio channel.

Information-of-the-other-end acquiring section 104 of communication terminal 201 extracts voice information about the other party in the conversation using the audio channel (step S1103), and information-of-the-other-end acquiring section 104 analyzes the extracted voice information about the other party and refers to a voice database of voice characteristics stored in information storage section 103 to uniquely identify the other party (step S1104).

Stored-information search section 105 of communication terminal 201 searches the information stored in information storage section 103 on the basis of the information about the identified other party and extracts the information related to user B, who is the other party (step S1105).

Information reproduction processing section 106 of communication terminal 201 displays the extracted image information related to user B via output section 107 (step 1106).

It is apparent that these steps are automatically executed in sequence.

As described above, according to Embodiment 3, communication terminal 201 searches and displays the information stored in communication terminal 201 using the voice information acquired from other-party communication terminal 202 as key information, and information that is of interest to the other party is therefore automatically displayed. It is thereby possible to help make communication with the other party more active, and to enable even the elderly and others who may be unaccustomed to operating information devices to have telephone conversation while readily displaying various video information through simple operation, thereby facilitating warm communication.

A user interface may also be provided that controls the timing at which voice recognition is performed.

For example, in order to control the timing at which voice recognition is performed, a software key/hardware key is provided, and voice recognition is started by a predetermined keystroke.

Voice recognition may also be performed as needed at any predetermined timing during communication.

When voice recognition is performed as needed, a user can rapidly identify the other-party user without performing an operation even when the target user of the other-party terminal changes (user of the terminal).

Voice recognition may be used not only for uniquely identifying the other party, but also for obtaining a keyword for search. Stored information can thereby be searched on the basis of words spoken by the other party, and information that is relevant to the conversation can easily be extracted.

A communication terminal may store a database of terms that facilitate voice recognition, thereby enabling enhancement of voice recognition.

Voice recognition may be performed for the user of the first terminal as well as for the other-party user.

The sound information that is recognized is also not limited to voice information, and ambient sound may also be recognized. For example, the location of the other party, the condition of the other party, and other information can be obtained by recognizing ambient sound. For example, a distinction is made between being indoors, outdoors, in a moving car, and other ambient conditions, and information can be searched accordingly. Recognition of a specific place, for example, a concert setting or a train station in which rail-related sounds can be heard, makes it possible to extract information that is more in accordance with the environment of the other party. For example, when the communication terminal is in a place in which a waterfall can be heard, stored information related to waterfalls can be given priority for extraction. When the location is a train station, timetable information can be given priority for extraction. The extracted timetable information can also be transmitted to and displayed in the other party' s communication terminal. This type of configuration makes it possible to easily extract and provide necessary information to the other party.

The other party was uniquely identified using voice information in the example described above, but the emotional state of the other party may also be included in the identification. Stored information that corresponds to the feelings of the other party can thereby be extracted.

Sound information was recognized in order to acquire information related to the other party in the example of embodiment 3, but the recognized information may also be image information received from the other party. Information about personal characteristics may be extracted by using an image recognition section to analyze information about a projected image of the other user, and the other party can be uniquely identified by referring to the information about personal characteristics that is included in the user information.

A person's information about the other party was used as the search key information in the example described above, but this configuration is not limiting, and the search key information may also be information about a background image captured by the other terminal, or the like. When the background includes a building, for example, related information can be searched using information about the building's characteristics as the search information.

Image recognition may also be performed with priority given to image information about a portion indicated using a pointing device. In this configuration, a target can be specified for image recognition. For example, when a plurality of people or an image that includes both a person and a building is displayed, the search key information can be specified by using a pointer device to specify a particular person or building.

When attribute information that accompanies the target in the image is collectively received, the attribute information can be used as the search information. The term "attribute information" refers to a person's name or building name attached to the image information as explanatory information, for example. Attribute information that is correlated to the target indicated by the pointing device may also be used as the search information.

Additional specification may also be elicited in order to narrow the range of information searched. For example, position-related information, time-related information, or other information may be specified as having priority to narrow the range of search.

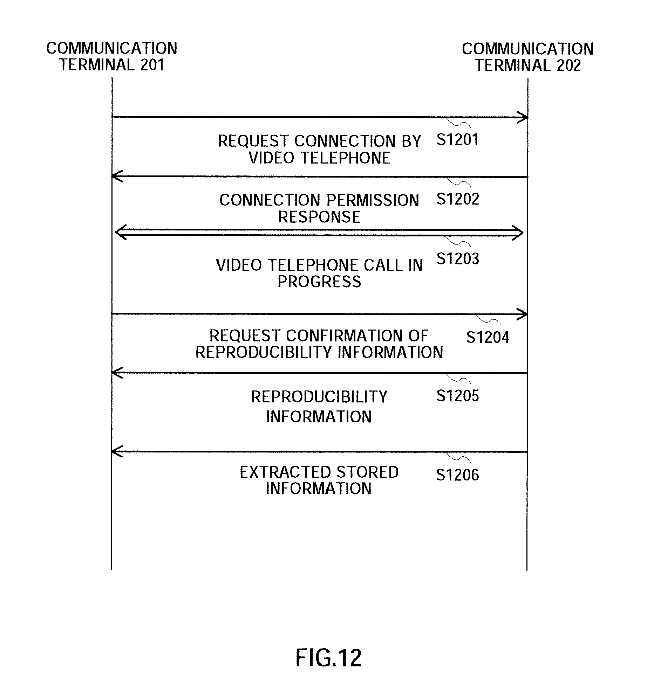

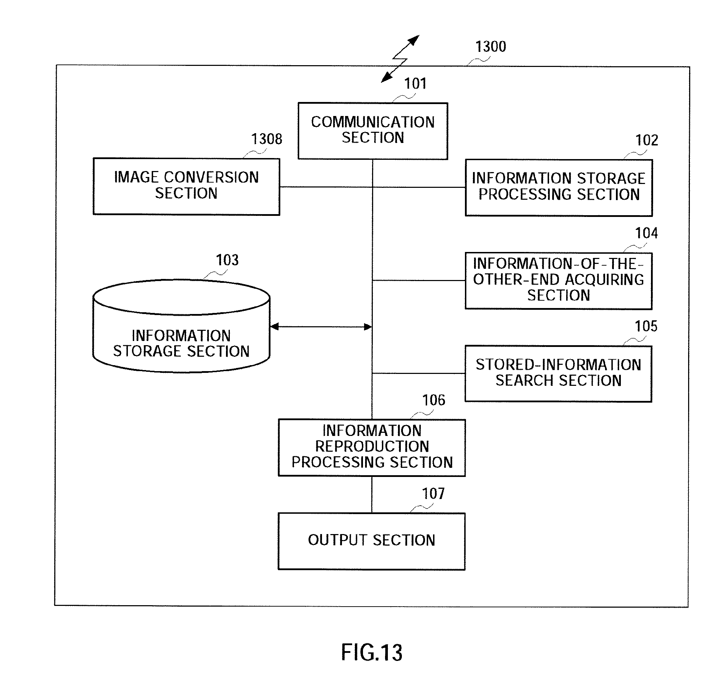

(Embodiment 4)
Embodiment 4 will be described with reference to FIGs.12 and 13.

Embodiment 4 is a communication method whereby the information in communication terminal 201 that was extracted using the other party's information is shared between communication terminal 201 and communication terminal 202 of the other party, and the information is displayed. This communication method will be described using FIG.12.

Video telephone communication in embodiment 4 is performed in the same manner as in Embodiment 1, using the 3G-324M protocol.

Communication terminal 201 issues a request for connection by video telephone to communication terminal 202 (step S1201).

Communication terminal 202 issues a response indicating permission to connect (step S1202).

A session for the video telephone call is established, and video telephone communication is in progress (step S1203).

As described in embodiment 1, communication terminal 201 acquires information that uniquely identifies user B, who is the other party, and the information that uniquely identifies user B is used as a basis for extracting information related to user B from information storage section 103 of communication terminal 201. Communication terminal 201 transmits a request to communication terminal 202 via the data transmission channel to confirm information as to the reproducibility of the extracted image (step S1204).

The subsequent steps will be described using an example in which resolution information included in the reproducibility of a static image is used as the reproducibility information.

Communication terminal 202 extracts the reproducibility-related information for which confirmation was requested, and transmits the reproducibility information to communication terminal 201 (step S1205) .

Communication terminal 201 refers to the acquired reproducibility information related to communication terminal 202, converts the static image (searched information) to a format that can be reproduced by communication terminal 202 when such conversion is necessary, and transmits the static image to communication terminal 202 via the data transmission channel (step S1206) .

At this time, the static image that is the searched information is displayed in both communication terminal 201 and communication terminal 202.

FIG. 13 is a block diagram showing the structure of the communication terminal 1300 of Embodiment 4. In FIG.13, the same reference symbols are used to refer to portions of the structure that are the same as those shown in FIG. 1, and no description thereof will be given. Communication terminal 1300 is provided with image conversion section 1308 that performs the image conversion routine executed in step S1206.

A conversion to a format that is reproducible by communication terminal 202 will be described herein.

Specifically, it is assumed that communication terminal 202 has reproduction capability to the extent of the QCIF (Quarter CIF) format as a result of communication terminal 201 confirming the image reproduction capability of the other party communication terminal 202 when image data stored in the CIF (Common Interface Format) are extracted. In this case, since communication terminal 202 cannot reproduce an image stored by communication terminal 201 in the CIF format, communication terminal 201 converts the data to the QCIF format that can be reproduced by communication terminal 202 and transmits the converted data to communication terminal 202 (step S1206).

In this case, an image in QCIF format is displayed in communication terminal 201 as well, but it is also possible to display the CIF-format image data in the format in which the data were originally stored.

As described above, according to Embodiment 4, communication terminal 201 searches and displays the information stored in communication terminal 201 so that the other-party information acquired from other-party communication terminal 202 serves as key information, and information is shared between communication terminal 201 and communication terminal 202 . It is thereby possible to help make communication with the other party more active, and to enable even the elderly and others who may be unaccustomed to operating information devices to have telephone conversation while readily displaying various video information through simple operation, thereby facilitating warm communication.

Resolution was used as the reproducibility information about a still image in the example described above, but this information may also relate to displayable colors and the like rather than resolution.

Information related to the reproducibility of a still image was described as the reproducibility information in the example described above, but the information may also relate to a moving image.

The reproducibility information also does not necessarily relate to an image, and sound-related reproducibility information or reproducibility information related to XML (Extensible Markup Language) and other structured data may be used.

Stored information was converted according to reproducibility information about the other party in the example described above, but conversion may also be performed according to a state of communication between terminals. For example, when a large capacity for data transfer is not available, conversion can be performed so as to reduce the data size for transmission. Video data may be compressed and transmitted as JPEG still images, for example.

In the routine for searching stored information, the information may be searched using the reproducibility information about the other party as a search condition.

(Embodiment 5)

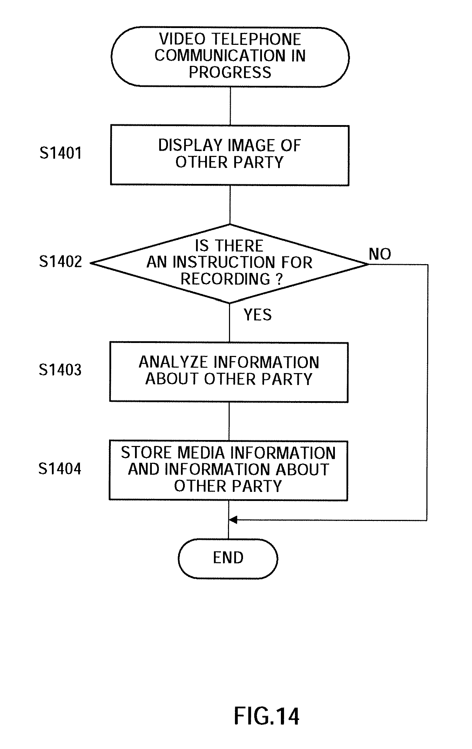

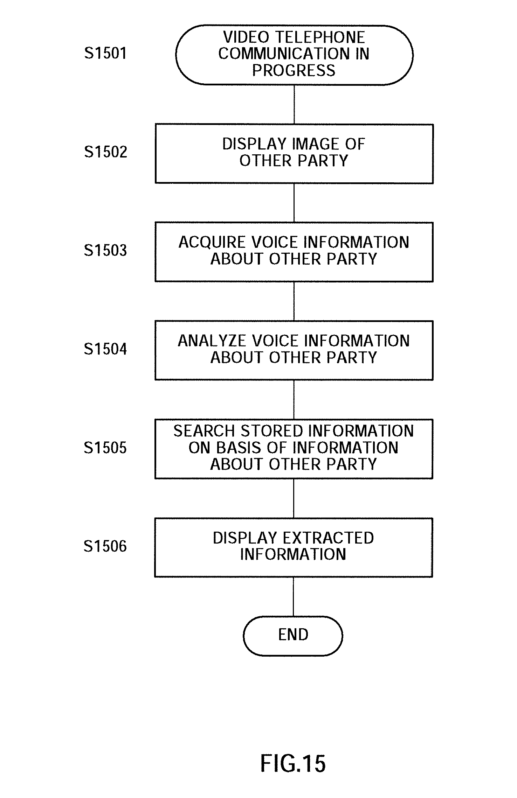

FIGs. 14 and 15 will be used to describe Embodiment 5, which is a communication method in which image information or voice information received from the other party is recognized by processing in the communication terminal shown in FIG.1, whereby the information related to the other party is obtained, and the recognized information is correlated with the received image information or voice information and stored.

Specifically, FIG.14 shows an example in which communication terminal 201 and communication terminal 202 communicate with each other, and communication terminal 201 acquires a characteristic related to the other party by performing recognition processing of image information or voice information that is received from the other party when information that includes image information and voice information from communication terminal 202 is stored. The acquired information related to the other party is correlated with the received image information and voice information and stored.

In step S1401, communication terminal 201 displays an image of the other party during the video telephone call in the same manner as in Embodiment 1.

Next, in step S1402, communication terminal 201 detects an instruction to record the image information or voice information received from the other party.

Detection of the recording instruction refers, for example, to detection of a key operation that indicates an instruction to record from the user by pressing or otherwise manipulating a software key or a hardware key.

When an instruction to store the received image information or voice information is detected in step S1402, communication terminal 201 in step S1403 performs the recognition routine for the image information or voice information received from the other party and obtains the information related to the other party.

In step S1404, communication terminal 201 then correlates the image information or voice information received from the other party with the other-party information (attribute information) that is related to the other party and is based on the characteristic information acquired by the recognition routine in step S1403, and stores the correlated information in information storage section 103.

Image information and information about personal characteristics that is related to the image information are collectively stored in information storage section 103 of communication terminal 201. The information about personal characteristics includes voice-related characteristic information.

The following description is of an example related to the recognition routine in step S1403 in which a received image is recognized, and person-related information about the other party is obtained.

Communication terminal 201 correlates and stores identification information for identifying a plurality of users, and information about personal characteristics that corresponds to each set of identification information in information storage section 103. For example, characteristic information about a facial image of each user or voice characteristics are stored in correlation with telephone numbers in an address book that represents user information.

In the image recognition routine performed by communication terminal 201, information about personal characteristics that is obtained by analyzing the image information received via the video channel is compared with each user's characteristic information that is included in the user information stored by information storage section 103, and the person who represents the other party is thereby uniquely identified.

As described above, according to Embodiment 5, image information or voice information received from the other party is subjected to recognition processing, whereby characteristics related to the other party are acquired, and the acquired information related to the other party is correlated with the received image information or voice information and stored. Therefore, the information about the other party can be referenced to search the received information, and the intended information can be easily extracted even when a large amount of information is searched.

Person-related information was extracted by image recognition in the example described in Embodiment 5, but this configuration is not limiting, and background-related information may also be extracted.

For example, when image recognition is performed for image information received from the communication other-party terminal, information that is characteristic of a background, e.g., building-related information, is extracted, and the characteristic information is stored collectively with the received image information. In this case, the stored information can be searched using the stored characteristic information when the stored information is searched. For example, it is possible to provide information that is determined to be more relevant by comparing background-related characteristic information stored in the information storage section with characteristic information obtained by image recognition of background information representing the image information from the other party. Stored information that has highly relevant characteristic information can also be searched using characteristic information about a building as the search conditions.

Communication terminal 100 may also be configured so that a pointing device is used to specify a position on the screen that displays the other party's image, and the image information about the specified portion is emphasized for image recognition.

This configurationmakes it possible to specify a target for image recognition. For example, when a plurality of people or an image that includes both a person and a building is displayed, the recognition target that has priority can be specified by using a pointer apparatus to specify a particular person or building, and characteristic information that is stored collectively can be specified when the received image information is stored.

Attribute information that is correlated with an image target that corresponds to a position in the other party's image that is specified by the pointing device may also be acquired from the other party and collectively stored. With such a configuration, attribute information that is correlated to the target indicated by the pointing device may also be used as the condition for searching the stored information.

FIG.15 will next be used to describe an example in which information about the other party is acquired by recognition of the other party's voice, and stored information is searched on the basis of the acquired key information.

In communication terminal 201 in this case as well, identification information for identifying a plurality of users is correlated with characteristic information related to a person image that corresponds to each set of identification information and stored in information storage section 103. For example, voice characteristic information for each user is stored in correlation with a telephone number (user information) in an address book.

In the voice recognition routine performed by communication terminal 201, voice information is isolated from sound information that is received via the audio channel, information about personal characteristics that is obtained by analyzing the isolated voice information is compared with each user' s voice characteristic information that is included in the user information stored in information storage section 103, and the person who represents the other party is thereby uniquely identified.

A specific sequence is described below.

Communication terminal 201 issues a request for connection by video telephone to communication terminal 202, and when an acceptance response is received from communication terminal 202, video telephone communication is performed according to the 3G-324M protocol using H.223 multiplexing (step S1501).

Images are exchanged using the video channel, and an image of the other party is displayed by output section 107 (step S1502). A conversation also takes place via the audio channel.

Information-of-the-other-end acquiring section 104 of communication terminal 201 extracts voice information about the other party in the conversation using the audio channel (step S1503), and information-of-the-other-end acquiring section 104 analyzes the extracted voice information about the other party and refers to a voice database of voice characteristics stored in information storage section 103 to uniquely identify the other party (step S1504) .

Stored-information search section 105 of communication terminal 201 searches the information stored in information storage section 103 on the basis of the information about the identified other party and extracts the information related to user B, who is the other party (step S1505).

Extracted information reproduction processing section 106 of communication terminal 201 displays the extracted image information related to user B via output section 107 (step 1506).

It is apparent that these steps are automatically executed in sequence.

A user interface may also be provided that controls the timing at which voice recognition is performed. For example, in order to control the timing at which voice recognition is performed, a software key/hardware key is provided, and voice recognition is started by a predetermined keystroke. Voice recognition may also be performed as needed at any predetermined timing during communication.

When voice recognition is performed as needed, a user can rapidly identify the other-party user without performing an operation even when the target user (user of the terminal) of the other-party terminal changes.

A communication terminal may store a database of terms that facilitate voice recognition, thereby enabling enhancement of voice recognition.

Voice recognition may be performed for the user of the first terminal as well as for the other-party user.

The sound information that is recognized is also not limited to voice information, and ambient sound may also be recognized. For example, the location of the other party, the condition of the other party, and other information can be obtained by recognizing ambient sound. For example, a distinction is made between being indoors, outdoors, in a moving car, and other ambient conditions, and information can be searched accordingly. It is also possible to recognize a specific place, for example, a concert setting or a train station in which rail-related sounds can be heard. This type of configuration makes it possible to easily extract information about the same state during subsequent search.

The present specification is based on Japanese Patent Application No.2004-262217 filed on September 9, 2004, and Japanese Patent Application No. 2004-270409 filed on September 16, 2004, the entire content of which is expressly incorporated by reference herein.

### Industrial Applicability

The present invention is suitable for use particularly in mobile telephones, mobile information terminals (PDA: Personal Digital Assistant), notebook personal computers, personal computers on a network formed by a wireless LAN or wired LAN, and other communication terminals, and in the communication methods of the same.

## Claims

1. A communication terminal comprising:
a key information acquiring section that acquires key information from other party;
a search section that searches stored information in a memory on the basis of the key information acquired from the other party and acquires information related to the key information; and
an information display section that displays the information obtained as a result of search by the search section.

2. The communication terminal according to claim 1, wherein the information display section displays the information in a thumbnail format.

3. The communication terminal according to claim 1, wherein the key information acquiring section extracts sound information or image information from information received during communication with the other party, and acquires the key information from the extracted sound information or image information.

4. The communication terminal according to claim 1, further comprising an information storage processing section that stores in the memory the storage information that represents content, or mail information received via a network.

5. The communication terminal according to claim 1, further comprising a key information selection section that selects the key information and issues a request to the other party, wherein the key information acquiring section acquires the key information requested by the key information selection section.

6. The communication terminal according to claim 1, further comprising:
an information-of-the-other-end acquiring section that acquires, from the other party, other-end information related to received information that includes image information; and
an information storage processing section that correlates the received information including image information received from the other party with the other-end information acquired by the information-of-the-other-end acquiring section, and stores the correlated information in the memory.

7. The communication terminal according to claim 6, wherein the information-of-the-other-end acquiring section acquires the other-end information when an instruction to store the received information that includes image information is detected.

8. The communication terminal according to claim 6, wherein the information-of-the-other-end acquiring section recognizes an image of an area specified by a pointing device.

9. A communication terminal comprising:
a key information acquiring section that acquires key information from other party;
a search section that searches stored information in the memory and acquires information related to the key information on the basis of the key information that is acquired from the other party; and
an information presentation section that transmits to the other party the information obtained as a result of search by the search section.

10. The communication terminal according to claim 9, further comprising:
a conversion section that converts the information obtained as a result of search by the search section to a prescribed format according to an ability of the other party to reproduce information, or conditions of communication with the other party,
wherein the information presentation section transmits to the other party the information converted by the conversion section.

11. A communication method comprising:
a key information acquiring step of acquiring key information from other party;
a search step of searching storage information stored in memory and acquiring information related to the key information on the basis of the key information that is acquired from the other party; and
an information display step of displaying the information obtained as a result of search in the search step.

12. The communication method according to claim 11, wherein the information display step is a step of displaying the information in a thumbnail format.

13. The communication method according to claim 11, wherein the key information acquiring step is a step of extracting sound information or image information from information received during communication with the other party, and acquiring the key information from the extracted sound information or image information.

14. The communication method according to claim 11, further comprising an information storage processing step of storing in the memory the storage information that represents content, or mail information received via a network.

15. The communication method according to claim 11, further comprising a key information selection step of selecting the key information and issuing a request to the other party, wherein the key information acquiring step is a step of acquiring the key information requested in the key information selection step.

16. The communication method according to claim 11, further comprising:
an information-of-the-other-end acquiring step of acquiring, from the other party, other-end information related to received information that includes image information; and
an information storage processing step of correlating the received information that includes image information received from the other party with the other-end information acquired in the information-of-the-other-end acquiring step, and storing the correlated information in the memory.

17. The communication method according to claim 11, wherein the information-of-the-other-end acquiring step is a step of acquiring the other-end information when an instruction to store the received information that includes image information is detected.

18. The communication method according to claim 11, wherein the information-of-the-other-end acquiring step is a step of recognizing an image of an area specified by a pointing device.

19. A communication method comprising:
a key information acquiring step of acquiring key information from other party;
a search step of searching storage information stored in the memory and acquiring information related to the key information on the basis of the key information that is acquired from the other party; and
an information presentation step of transmitting to the other party the information obtained as a result of search in the search step.

20. The communication terminal according to claim 19, further comprising a conversion step of converting the information obtained as a result of search in the search step to a prescribed format according to an ability of the other party to reproduce information, or conditions of communication with the other party, wherein the information presentation step is a step of transmitting to the other party the information converted in the conversion step.

## Amended claims

### Amended claims under Art. 19.1 PCT

**1.** (canceled)

**2.** (canceled)

**3.** (canceled)

**4.** (canceled)

**5.** (canceled)

**6.** (canceled)

**7.** (canceled)

**8.** (canceled)

**9.** (canceled)

**10.** (canceled)

**11.** (canceled)

**12.** (canceled)

**13.** (canceled)

**14.** (canceled)

**15.** (canceled)

**16.** (canceled)

**17.** (canceled)

**18.** (canceled)

**19.** (canceled)

**20.** (canceled)

**21.** (added)
A communication terminal comprising:
an information storage section that stores information processed for storage;
an information acquiring section that acquires information for uniquely identifying other party;
a search section that searches the stored information on the basis of the acquired information for uniquely identifying the other party, acquires personal information related to the other party, and searches the stored information using the acquired personal information as key information, thereby extracting information that relates to the key information from the stored information; and
an information display section that displays the information related to the key information obtained as a result of search by the search section.

**22.** (added)
The communication terminal according to claim 21, wherein the information display section displays the information in a thumbnail format.

**23.** (added)
The communication terminal according to claim 21, further comprising an information storage processing section that stores, in the information storage section, the stored information that represents content, or mail information received via a network.

**24.** (added)
A communication terminal comprising:
an information storage section that stores information processed for storage;
an information acquiring section that acquires information for uniquely identifying other party;
a search section that searches the stored information on the basis of the acquired information for uniquely identifying the other party, acquires personal information related to the other party, and retrieves the stored information using the acquired personal information as key information, thereby extracting information that relates to the key information from the stored information; and
an information presentation section that transmits to the other party the information related to the key information obtained as a result of search by the search section.

**25.** (added)
The communication terminal according to claim 24, further comprising a conversion section that converts the information obtained as a result of retrieval by the search section to a prescribed format according to an ability of the other party to reproduce information, or conditions of communication with the other party, wherein the information presentation section transmits to the other party the information converted by the conversion section.

**26.** (added)
A communication method comprising:
an information storage section that stores information processed for storage;
an information acquiring step of acquiring information for uniquely identifying other party;
a search step of searching the stored information, which is information that is stored in memory and is to be processed for storage, on the basis of the acquired information for uniquely identifying the other party, acquiring personal information related to the other party, and searching the stored information using the acquired personal information as key information, thereby extracting information that relates to the key information from the stored information; and
an information display step of displaying the information related to the key information obtained as a result of search by the search step.

**27.** (added)
The communication method according to claim 26, wherein the information display step is a step of displaying the information in a thumbnail format.

**28.** (added)
A communication method comprising:
an information acquiring step of acquiring information for uniquely identifying other party;
a search step of searching the stored information, which is information that is stored in memory and is to be processed for storage, on the basis of the acquired information for uniquely identifying the other party, acquiring personal information related to the other party, and searching the stored information using the acquired personal information as key information, thereby extracting information that relates to the key information from the stored information; and
an information presentation step of transmitting to the other party the information related to the key information obtained as a result of search by the search section.

**29.** (added)
The communication terminal according to claim 28, further comprising a conversion step of converting the information obtained as a result of search in the search step to a prescribed format according to an ability of the other party to reproduce information, or conditions of communication with the other party, wherein the information presentation step is a step of transmitting to the other party the information converted in the conversion step.
